# EUROPEAN PATENT APPLICATION

(11) **EP 2 680 128 A1**
(43) Date of publication of application: **01.01.2014**
(21) Application number: 11861097.1
(22) Date of filing: 22.07.2011
(51) Int. Cl.: G06F 3/14

(54) **METHOD FOR PROVIDING READING SERVICE, CONTENT PROVISION SERVER AND SYSTEM**

(30) Priority: 17.03.2011 CN 201110065354
(71) Applicant: ZTE Corporation, Shenzhen, Guangdong 518057 (CN)
(72) Inventor: MIAO, Guihai, Shenzhen Guangdong 518057 (CN)
(74) Representative: Ahner, Philippe
(86) International application number: PCT/CN2011/077489
(87) International publication number: WO 2012/122771

(57) **Abstract**

The present disclosure provides a method for providing reading service, a content provision server and system, relates to the field of networks, and intends to solve the technical problem of continuity of reading contents when a user reads image galleries generated according to the same original contents on different terminals. The method for providing reading service includes: a content provision server sets a tag according to an instruction from a first terminal; the content provision server receives a service request from a second terminal and sends the tag thereto; the content provision server receives an instruction indicating that the tag is selected from the second terminal; the content provision server searches for a second image gallery corresponding to a terminal type of the second terminal; the content provision server searches for a second serial number of a second image in the second image gallery corresponding to the first serial number marked by the tag; and starting from the second serial number, the content provision server sends the second image in the second image gallery to the second terminal. The present invention is applied to the reading of e-books under three-screen aggregation.

## Description

### TECHNICAL FIELD

The present disclosure relates to the field of networks, in particular to a method for providing reading service, a content provision server and system.

### BACKGROUND

As the decision "accelerating the integration of the three types of networks, i.e., telecommunication network, the broadcast network and Internet" has been made on the State Council executive meeting held in early 2010, the integration of the three types of networks, which have been discussed for many years, enters the implementation phase. The core of the integration of the three types of networks is users, which get information and service through three types of screens, i.e., the television screen, the computer screen and the mobile phone screen. The integration of the three types of screens intends to take full advantage of existing platforms and resources, and take users as the core so as to achieve good transmission of video information and complementary services between three types of screens, so that users may obtain information more conveniently and enjoy better experience. The core value of the technical architecture for the integration of the three types of screens is to provide a new experience for users through integration of backend resources and complementary advantages of front ends and terminals.

The status of the animation industry in global economy, which is represented by manga, cartoon, animation, game and multi-media content products and the like, is improved quickly, and it becomes a pillar industry after the software industry. In the background of the integration of three types of screens, users may choose various screens at various times according to various hardware and their requirements, so as to proactively experience multi-media contents in the future.

When a user is reading an image gallery such as a manga, which may be classed into single-frame manga, four-frame manga and multi-frame manga, the user may read the manga through various screens (e.g., the screen of mobile phone, the screen of computer and the screen of the television). For example, a user may read a manga using his/her smart mobile phone on the way to work; when the user goes home, he/she may read the manga from where he/she left off last time on anther device (e.g., a television or a computer) through a bookmark. However, since different devices have different requirements for an image, the same manga will have different display effects on different terminals. For example, a manga may be correctly displayed on a smart mobile phone, but cannot be clearly displayed on a computer. Therefore, users cannot read a manga on various terminals continuously.

### SUMMARY

The present disclosure provides a method for providing reading service, a content provision server and system, so that a user may continuously read an image gallery with same contents on various terminals.

Embodiments of the present disclosure provide technical solutions as follows.

In one aspect, there is provided a method for providing reading service, which is applied to a content provision server, the method comprises:
setting, by the content provision server, a tag according to an instruction of a first terminal, the tag is configured to indicate a first serial number of a first image of a first image gallery corresponding to the first terminal;
receiving, by the content provision server, a service request from a second terminal, the service request includes a terminal type of the second terminal;
sending, by the content provision server, the tag to the second terminal;
receiving, by the content provision server from the second terminal, an instruction indicating that the tag is selected;
searching, by the content provision server, a second image gallery corresponding to the terminal type of the second terminal, wherein a second image of the second image gallery adapts to display performance of the second terminal;
searching, by the content provision server, a second serial number of the second image of the second image gallery, wherein the second serial number corresponds to the first serial number marked by the tag; and
sending, by the content provision server, the second image of the second image gallery to the second terminal starting from the second serial number.

Before the step of setting a tag, by the content provision server, according to an instruction of a first terminal, the method may further include:
receiving, by the content provision server, a service request including a terminal type of the first terminal from the first terminal;
searching, by the content provision server, the first image gallery corresponding to the terminal type of the first terminal, wherein the first image of the first gallery adapts to display performance of the first terminal;
sending, by the content provision server, the first image to the first terminal.
when the first serial number and the second serial number are one-to-many, the step of searching, by the content provision server, a second serial number of the second picture of the second photo gallery corresponding to the first serial number marked by the tag comprises:
   searching, by the content provision server, a minimum value of the second serial number of the second image of the second image gallery, wherein the second serial number corresponds to the first serial number marked by the tag;
correspondingly, the step of sending, by the content provision server, the second image of the second image gallery to the second terminal starting from the second serial number comprises:
   sending, by the content provision server, the second image of the second image gallery to the second terminal starting from the minimum value of the second serial number.
wherein the step of searching, by the content provision server, a second serial number of the second picture of the second photo gallery corresponding to the first serial number marked by the tag may include:
   searching, by the content provision server, a third serial number of an original image of an original image gallery, wherein the third serial number corresponds to the first serial number marked by the tag;
   searching, by the content provision server, the second serial number of the second image of the second image gallery, wherein the second serial number corresponds to the third serial number of the original image.

Before the step of receiving, by the content provision server, a service request from the first terminal, the method may further include:
obtaining, by the content provision server, an original image gallery including an original image;
generating, by the content provision server, the first image through processing the original image according to a pixel size of the original image and the display performance of the first terminal;
generating, by the content provision server, a relationship between the first serial number of the first image and a third serial number of an original image;
generating, by the content provision server, the second image though processing the original image according to the pixel size thereof and the display performance of the second terminal;
generating, by the content provision server, a relationship between the second serial number of the second image and the third serial number of the original image.

After the step of generating, by the content provision server, the second image though processing the original image according to the pixel size thereof and the display performance of the second terminal, the method may further include:
generating, by the content provision server, a relationship between the first serial number of the first image and the second serial number of the second image.

The step of generating the first image through processing the original image may include:
cutting, by the content provision server, the original image to generate the first image; or
piecing together, by the content provision server, the original image to generate the first image; or
transforming, by the content provision server, pixels of the original image to generate the first image.

The display performance of the second terminal may include: a physical size of a screen of the second terminal, a pixel size of the screen of the second terminal, a processing speed a CPU of the second terminal, and/or a bandwidth of an access network for the second terminal.

Another aspect provides a content provision server comprising: a tag setting module, a receiving unit, a first sending module, a receiving module, a first searching module, a second searching module and a second sending module, wherein
the tag setting module is configured to set a tag according to an instruction of a first terminal, the tag is configured to indicate a first serial number of a first image of a first image gallery corresponding to the first terminal;
the receiving module is configured to receive a service request from a second terminal, the service request includes a terminal type of the second terminal;
the first sending module is configured to send the tag to the second terminal;
the receiving module is configured to receive an instruction indicating that the tag is selected from the second terminal;
the first searching module is configured to search a second image gallery corresponding to the terminal type of the second terminal, wherein a second image of the second image gallery adapts to display performance of the second terminal;
the second searching module is configured to search a second serial number of the second image of the second image gallery, wherein the second serial number corresponds to the first serial number marked by the tag;
the second sending module is configured to send the second image of the second image gallery to the second terminal starting from the second serial number.

The content provision server may further include:
an obtaining module, an image processing module and a relationship generating module, wherein
the obtaining module is configured to obtain an original image gallery including an original image;
the image processing module is configured to generate the first image through processing the original image according to a pixel size thereof and display performance of the first terminal, and to generate the second image through processing the original image according to the pixel size thereof and display performance of the second terminal;
the relationship generating module is configured to generate a relationship between the first serial number of the first image and a third serial number of the original image, and to generate a relationship between the second serial number of the second image and the third serial number of the original image.

The image processing module may include:
a cutting sub-module configured to cut the original image to generate the first image; or
a piecing sub-module configured to piece together the original image to generate the first image, or
a transforming sub-module configured to perform pixel transformation on the original image to generate the first image.

Another aspect provides a content provision system comprising:
the first terminal is configured to send an instruction of setting a tag to the content provision server;
the content provision server is configured to:
   set the tag according to the instruction from the first terminal, the tag is configured to indicate a first serial number of a first image of a first image gallery corresponding to the first terminal;
   receive a service request from the second terminal, wherein the service request includes a terminal type of the second terminal;
   send the tag to the second terminal;
   receive an instruction indicating that the tag is selected from the second terminal;
   search a second image gallery corresponding to the terminal type of the second terminal, wherein a second image of the second image gallery adapts to display performance of the second terminal;
   search a second serial number of the second image of the second image gallery, the second serial number corresponds to the first serial number marked by the tag; and
   send the second image of the second image gallery to the second terminal starting from the second serial number;
the second terminal is configured to receive the second image of the second image gallery from the content provision server starting from the second serial number.

The technical solutions of the present disclosure at least have the following advantages.

After reading a first image of a first image gallery using a first terminal, a user adds a tag at a first serial number of the first image; a second terminal obtains a second serial number of a second image of a second image gallery, when the user reads the second image of the second image gallery corresponding to the same original image, wherein the second serial number corresponds to first serial number of the first image, so that the user may read the second image from the second serial number, which may ensure the continuity between the second image of the second serial number and the first image the first serial number, so that the user may perform seamless reading.

### BRIEF DESCRIPTION OF THE DRAWINGS

Fig. 1 is a flowchart of a method for providing reading service according to an embodiment of the present disclosure.
Fig. 2 is a flowchart of another method for providing reading service according to an embodiment of the present disclosure.
Fig. 3 is a flowchart of a step 21 in the method for providing reading service shown in fig. 2.
Fig. 4 is a structure diagram of a content provision server according to the present disclosure.
Fig. 5 is a structure diagram of a content provision system according to the present disclosure.
Fig. 6 is a diagram for reading manga in an application scenario according to the present disclosure.
Fig. 7 is a flowchart for converting multi-screen bookmark's page serial number in an application scenario according to the present disclosure.

### DETAILED DESCRIPTION

To highlight the technical problems to be solved, technical solutions and advantages of the present disclosure more obvious, the description will be described in detail with drawings.

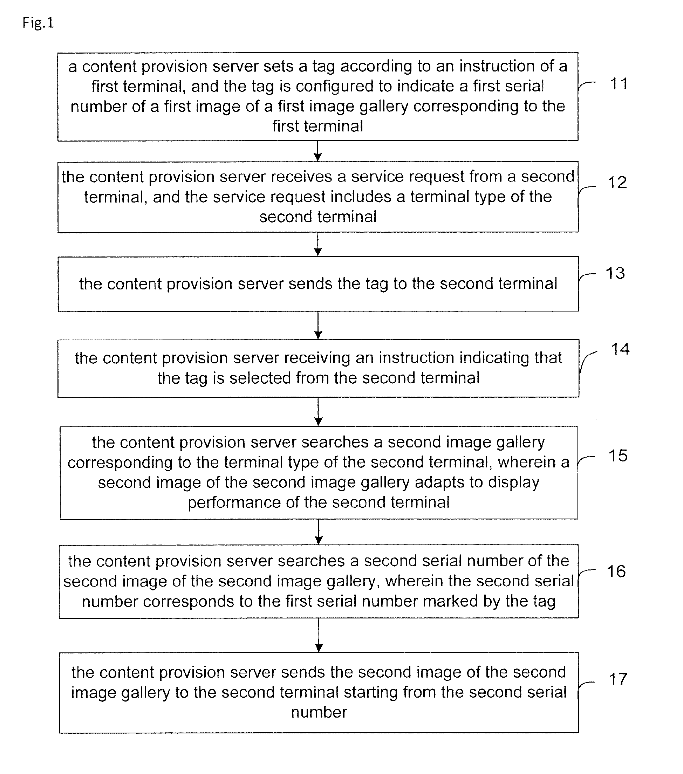

As shown in Fig. 1, the method for providing reading service according to an embodiment of the present disclosure may be applied to a content provision server. The method comprises:

Step 11: a content provision server sets a tag according to an instruction of a first terminal, and the tag is configured to indicate a first serial number of a first image a first image gallery corresponding to the first terminal.

Step 12: the content provision server receives a service request from a second terminal, wherein the service request includes a terminal type of the second terminal.

Step 13: the content provision server sends the tag to the second terminal.

Step 14: the content provision server receives an instruction indicating that the tag is selected from the second terminal.

Step 15: the content provision server searches a second image gallery corresponding to the terminal type of the second terminal, wherein a second image of the second image gallery adapts to the display performance of the second terminal.

Step 16: the content provision server searches a second serial number of the second image of the second image gallery, wherein the second serial number corresponds to the first serial number marked by the tag.

Alternatively, the step 16 may comprises: the content provision server searches third serial number of an original image of an original image gallery, wherein the third serial number corresponds to the first serial number marked by the tag; and searches the second serial number of the second image of the second image gallery, wherein the second serial number corresponds to the third serial number of the original image.

Step 17: the content provision server sends the second image of the second image gallery to the second terminal starting from the second serial number.

Alternatively, when the first serial number and the second serial number are one-to-many, the step 16 is as follows: the content provision server searches a minimum value of the second serial number of the second image of the second image gallery, wherein the second serial number corresponds to the first serial number marked by the tag; correspondingly, the step 17 is as follows: the content provision server sends the second image of the second image gallery to the second terminal starting from the minimum value of the second serial number. In this way, when a content of the first image corresponds to contents of multiple second images, the continuity of the original image's contents may be ensure when reading the second image.

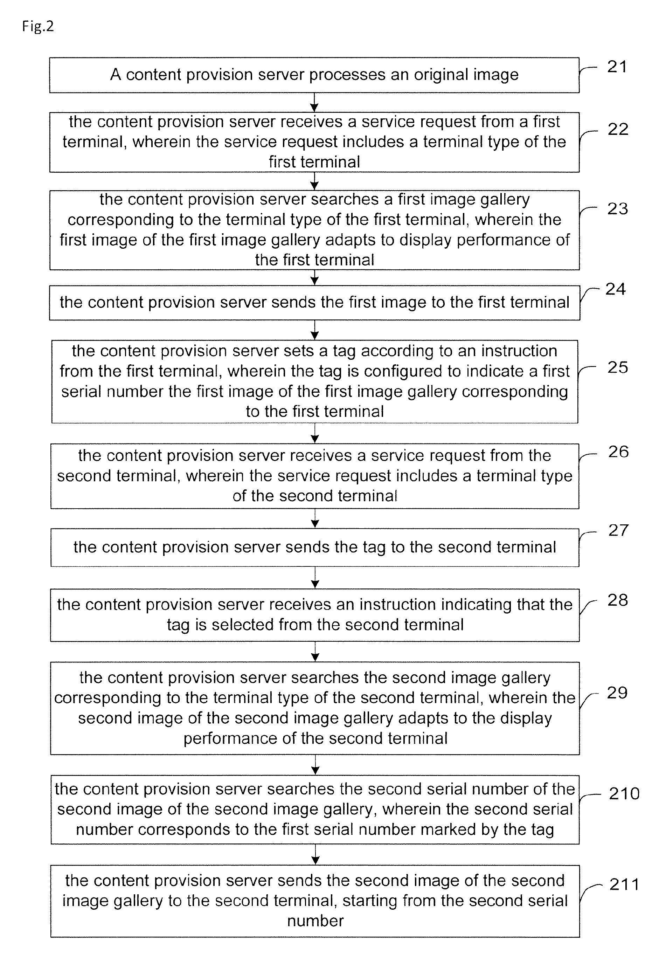

Fig. 2 illustrates a method for providing reading service according to another embodiment of the present disclosure, which may be applied to a content provision server. The method comprises the following steps.

Step 21: the content provision server generates a first image, a second image, a relationship between a first serial number of the first image and a third serial number of an original image, a relationship between a second serial number of the second image and the third serial number of the original image, a relationship between the first serial number of the first image and the second serial number of the second image, according to the original image.

This step is a step that the content provision server processes the original image.

Step 22: the content provision server receives a service request from the first terminal, wherein the service request includes a terminal type of the first terminal.

Step 23: the content provision server searches a first image gallery corresponding to the terminal type of the first terminal, wherein a first image of the first image gallery adapts to display performance of the first terminal.

Step 24: the content provision server sends the first image to the first terminal.

Step 25: the content provision server sets a tag according to an instruction of the first terminal, the tag is configured to indicate a first serial number of the first image of a first image gallery corresponding to the first terminal.

Steps 22-25 are procedures when the user is reading on the first terminal.

Step 26: the content provision server receives a service request from the second terminal, wherein the service request includes a terminal type of the second terminal.

Step 27: the content provision server sends the tag to the second terminal.

Step 28: the content provision server receives an instruction indicating that the tag is selected from the second terminal.

Step 29: the content provision server searches a second image gallery corresponding to the terminal type of the second terminal.

Herein, a second image of the second image gallery adapts to display performance of the second terminal.

Step 210: the content provision server searches the second serial number of the second image of the second image gallery, wherein the second serial number corresponds to the first serial number marked by the tag.

Step 211: the content provision server sends the second image of the second image gallery to the second terminal, starting with the second serial number.

Steps 26-211 are procedures when the user is reading on the second terminal.

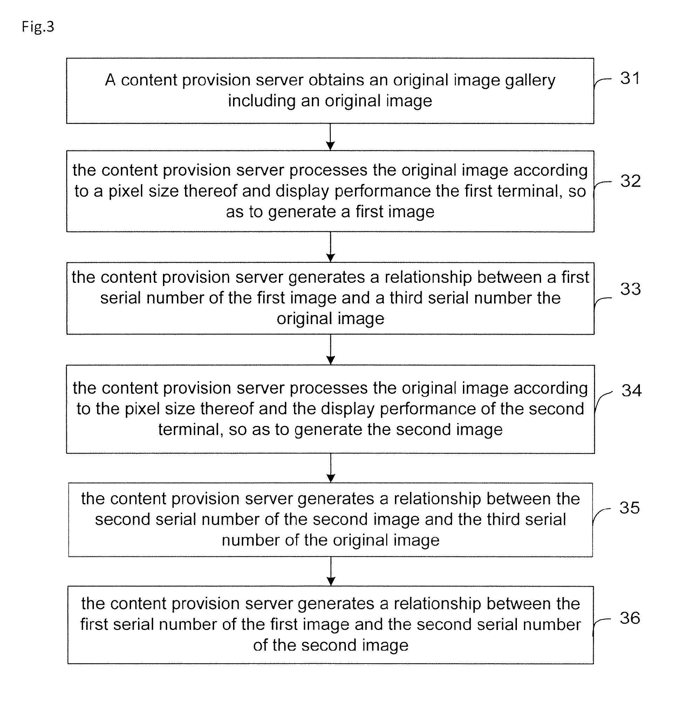

As shown in Fig. 3, the step 21 specially comprises:

Step 31: the content provision server obtains an original image gallery including an original image.

Step 32: the content provision server processes the original image according to a pixel size thereof and display performance of the first terminal, so as to generate a first image.

Herein, the step of generating the first image through processing the original image comprises: the content provision server cuts the original image to generate the first image; or the content provision server pieces together the original image to generate the first image; or the content provision server performs pixel transformation on the original image to generate the first image.

The display performance of the first terminal comprises: a physical size of a screen of the first terminal, a pixel size of the screen the first terminal, a processing speed of a CPU the first terminal, and/or a bandwidth of an access network for the first terminal. In this way, the second image displayed on the second terminal adapts to the second terminal.

Step 33: the content provision server generates a relationship between a first serial number of the first image and a third serial number of the original image.

Step 34: the content provision server processes the original image according to the pixel size thereof and the display performance of the second terminal, so as to generate the second image.

Herein, the step of generating the second image through the original image comprises: the content provision server cuts the original image to generate the second image; or the content provision server pieces together the original image to generate the second image; or the content provision server performs the pixel transformation on the original image to generate the second image.

The display performance of the second terminal comprises: a physical size of a screen of the second terminal, a pixel size of the screen of the second terminal, a processing speed of a CPU of the second terminal, and/or a bandwidth of an access network for the second terminal.

Step 35: the content provision server generates a relationship between a second serial number of the second image and a third serial number of the original image.

Step 36: the content provision server generates a relationship between the first serial number of the first image and the second serial number of the second image.

Herein, this step is optional. In the subsequent procedures, the second serial number corresponding to the marked first serial number may be directly found through the relationship between the first serial number and the second serial number.

In the above solutions, the first image is generated through processing the original image according to the pixel size of the original image, the physical size the screen of the first terminal and the pixel size of the screen of the first terminal; the second image is generated through processing the original image according to the pixel size of the original image, the physical size of the screen of the second terminal and the pixel size of the screen of the second terminal. Therefore, the image displayed on the terminal adapts to the terminal, which may ensure the display effect of the terminal.

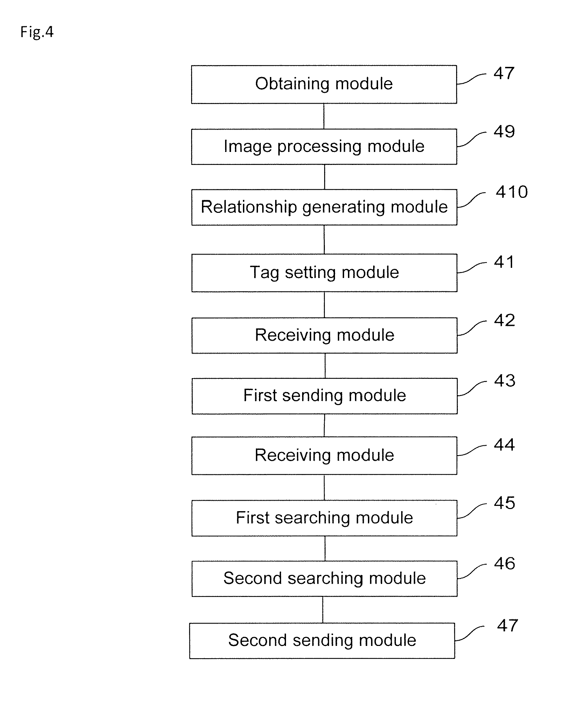

Fig. 4 illustrates a content provision server according to the present disclosure, which comprises: a tag setting module 41, a receiving module 42, a first sending module 43, a receiving module 44, a first searching module 45, a second searching module 46 and a second sending module 47.

The tag setting module 41 is configured to set a tag according to an instruction of a first terminal, wherein, the tag is configured to indicate a first serial number of a first image of a first image gallery corresponding to the first terminal.

The receiving module 42 is configured to receive a service request from a second terminal, the service request includes a terminal type of the second terminal.

The first sending module 43 is configured to send the tag to the second terminal.

The receiving module 44 is configured to receive an instruction indicating that the tag is selected from the second terminal.

The first searching module 45 is configured to search a second image gallery corresponding to the terminal type of the second terminal, wherein a second image of the second image gallery adapts to display performance of the second terminal.

The second searching module 46 is configured to search a second serial number of the second image of the second image gallery, wherein the second serial number corresponds to the first serial number marked by the tag.

The second sending module 47 is configured to send the second image of the second image gallery to the second terminal starting from the second serial number.

The content provision server further comprises: an obtaining module 48, an image processing module 49 and a relationship generating module 410.

The obtaining module 48 is configured to obtain the original image gallery including the original image.

The image processing module 49 is configured to generate the first image through processing the original image according to a pixel size thereof and display performance of the first terminal; and to generate the second image through processing the original image according to the pixel size thereof and display performance of the second terminal.

The relationship generating module 410 is configured to generate a relationship between a first serial number of the first image and a third serial number of the original image; and to generate a relationship between the second serial number of the second image and the third serial number of the original image.

The image processing module 49 further comprises:
a cutting sub-module configured to cut the original image to generate the first image and the second image; or
a piecing sub-module configured to piece together the original images to generate the first image and the second image, or,
a transforming sub-module configured to perform pixel transformation on the original image to generate the first image and the second image.

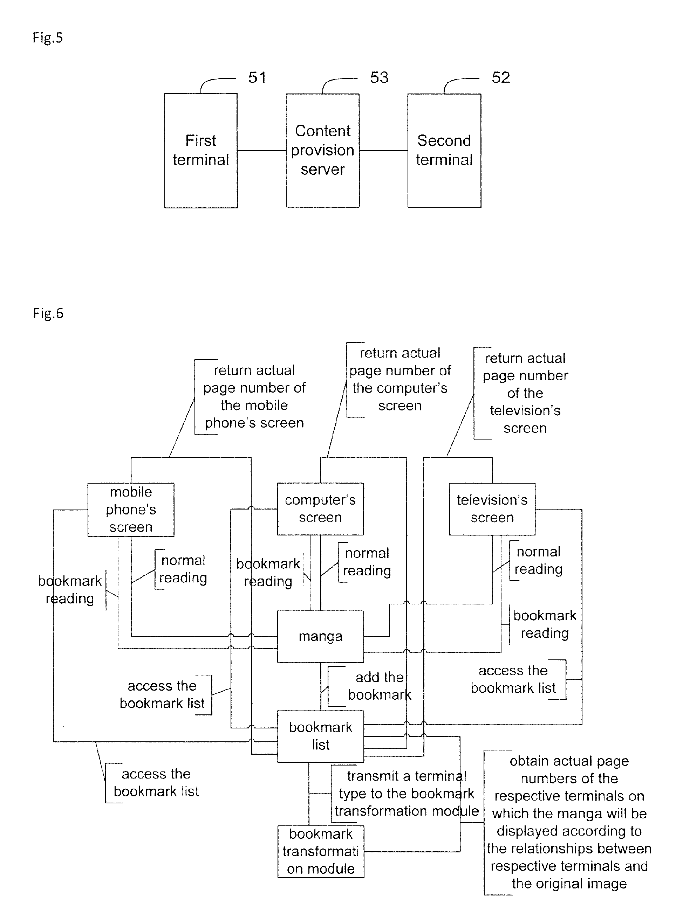

Fig. 5 illustrates a content provision sever according to the present disclosure, which comprises: a first terminal 41, a second terminal 52 and a content provision server 53.

The first terminal 51 is configured to send an instruction of setting a tag to the content provision server.

The content provision server 53 is configured to set a tag according to the instruction from the first terminal 51, the tag is configured to indicate a first serial number of a first image of the first image gallery corresponding to the first terminal 51; receive a service request from the second terminal 52, wherein the service request includes a terminal type of the second terminal 52; send the tag to the second terminal 52; receive an instruction indicating that the tag is selected from the second terminal 52; search a second image gallery corresponding to the terminal type of the second terminal 52, wherein a second image of the second image gallery adapts to display performance of the second terminal 52; search a second serial number of the second image of the second image gallery, wherein the second serial number corresponds to the first serial number marked by the tag; and send the second image of the second image gallery to the second terminal 52, starting from the second serial number.

The second terminal 52 is configured to send a service request to the content provision server 53, and send an instruction indicating that the tag is selected to the content provision server 53 after receiving the tag returned from the content provision server 53; and to receive the second image of the second image gallery from the content provision server 53, starting from the second serial number.

The solutions of the present disclosure may be applied to a scenario of manga reading under a circumstance of the integration of three types of networks, so as to realize data processing on a telecommunication network (a mobile phone), a broadcast network (a television), Internet (a computer) when reading a same manga, and data processing for converting multi-screen bookmark's page serial number. In this way, under a circumstance of the integration of three types of screens, users may seamlessly read a same image gallery, such as a manga, when switching between screens.

Taking a manga as an example, the application scenario for the method according to the present disclosure will be described.

An original image is manga material to be deeply processed and corresponds to the above original image. The deep-process corresponds to the above image processing. The deep-process is an operation, such as to adjust a size of the original image based on the original image of the manga so as to make the image adapt to requirements of various sizes of various types screens.

A multi-screen image is deeply processed manga material based on the original image, and comprises WEB (World Wide Web) type (configured to display on a computer), WAP (WIRELESS PRESENT DISCLOSURE PROTOCOL) type (configured to display on a mobile phone), and EPG (Electronic Program Guide) type (configured to display on a television) is configured to preview the multi-screen manga and correspond to the above first and second images.

A page number relationship table for service contents is configured to store the relationship between the processed image and the original image, which corresponds to the above relationship between the first serial number of the first image and the third serial number of the original image, the relationship between the second serial number of the second image and the third serial number of the original image, and the relationship between the first serial number of the first image and the second serial number of the second image.

A user bookmark table is configured to store the bookmark history of the user.

The method comprises the following steps:

Step A: a content directory structure of physical locations where the original image and deeply processed image are stored is as follows.

### For example:

The code rule for content ID is that there are 10 bits in which the first 3 bits indicate the source of the CP (Content Provider), the middle 4 bits indicate the serial number of contents, and the last 3 bits indicate tabs for each episode of contents.

For example, 1020001000 indicates content ID of the manga, the first episode ID is 1020001001, and the second episode ID is 1020001002.

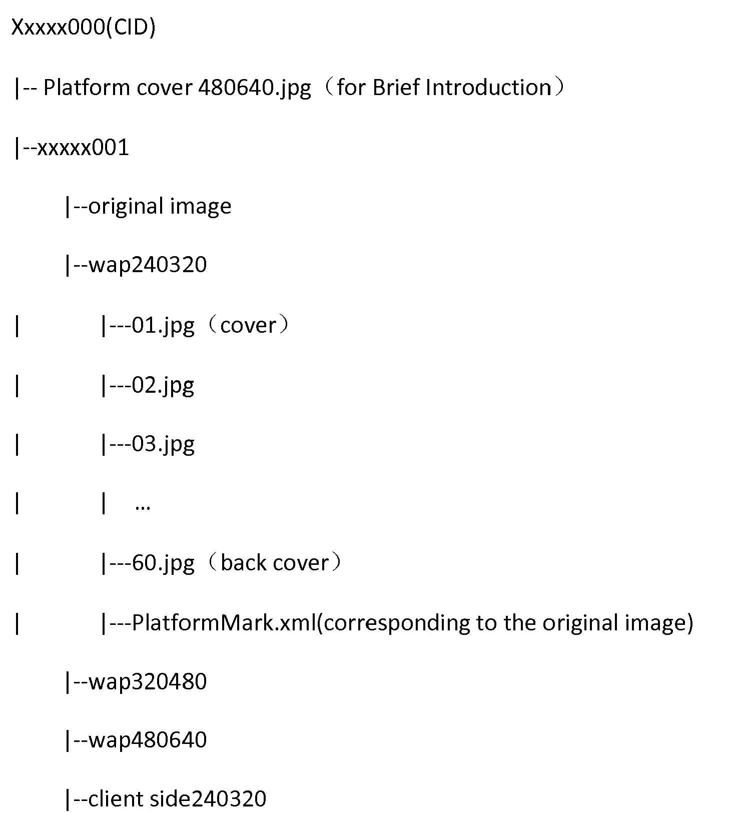

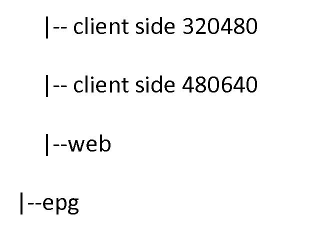

Step B: A page number relationship table for service contents is established.

The structure of this table is as follows.

| field name | field type | note |
|---|---|---|
| appindex | number(10) | service index |
| chapterid | varchar2(40) | chapter id |
| terminaltype | number(10) | hardware type 1web; 2.wap240x320;3.wap320x480;4wap480x640;5.client side 240x320;6. client side 320x480;7 client side 480x640;8 epg |
| originalpagenum | number(10) | the page number of the original image |
| pagenum | number(10) | the actual page number of the processed image |

Step C: converting data in PlatformMark.xml corresponding to the original image into the table.

### Example for PlatformMark.xml:

<?xml version="1.0"?><Mark Type="wap240320"><Detail Page="1" Scene="01" /><Detail Page="1" Scene="02" /><Detail Page="1" Scene="03" /><Detail Page="1" Scene="04" /><Detail Page="1" Scene="05" /><Detail Page="2" Scene="06" /><Detail Page="2" Scene="07" /><Detail Page="2" Scene="08" /><Detail Page="2" Scene="09" /><Detail Page="2" Scene="10" /><Detail Page="3" Scene="11" /><Detail Page="3" Scene="12" /><Detail Page="3" Scene="13" /><Detail Page="3" Scene="14" /><Detail Page="3" Scene="15" /><Detail Page="4" Scene="16" /><Detail Page="4" Scene="17" /><Detail Page="4" Scene="18" /><Detail Page="4" Scene="19" /><Detail Page="4" Scene="20" /><Detail Page="5" Scene="21" /><Detail Page="5" Scene="22" /><Detail Page="5" Scene="23" /><Detail Page="5" Scene="24" /><Detail Page="5" Scene="25" /><Detail Page="6" Scene="26" /><Detail Page="6" Scene="27" /><Detail Page="6" Scene="28" /><Detail Page="6" Scene="29" /><Detail Page="6" Scene="30" /><Detail Page="7" Scene="31" /><Detail Page="7" Scene="32" /><Detail Page="7" Scene="33" /><Detail Page="7" Scene="34" /><Detail Page="7" Scene="35" /><Detail Page="8" Scene="36" /><Detail Page="8" Scene="37" /><Detail Page="8" Scene="38" /><Detail Page="8" Scene="39" /><Detail Page="8" Scene="40" /><Detail Page="9" Scene="41" /><Detail Page="9" Scene="42" /><Detail Page="9" Scene="43" /><Detail Page="9" Scene="44" /><Detail Page="9" Scene="45" /><Detail Page="11" Scene="46" /><Detail Page="11" Scene="47" /><Detail Page="11" Scene="48" /><Detail Page="11" Scene="49" /><Detail Page="11" Scene="50" /><Detail Page="12" Scene="51" /><Detail Page="12" Scene="52" /><Detail Page="12" Scene="53" /><Detail Page="12" Scene="54" /><Detail Page="12" Scene="55" /><Detail Page="10" Scene="56" /><Detail Page="10" Scene="57" /><Detail Page="10" Scene="58" /><Detail Page="10" Scene="59" /><Detail Page="10" Scene="60" /></Mark>

Wherein "Page" indicates the page number of the original image, "Scene" indicates the actual page number on this terminal, the page number of the original image corresponds to the above serial number of the original image, and the actual serial number on the terminal corresponds to the above serial number of the first image or the second image.

Step D: the user's bookmark table is established.

The structure of this table is as follows:

| field name | field type | note |
|---|---|---|
| allindex | number(10) | userindex |
| bookmarkid | varchar2(40) | bookmark id |
| bookmarkname | varchar2(255) | bookmark name |
| bookmarktype | number(3) | 1 system bookmark 2 user bookmark |
| appindex | number(10) | service index |
| chapterid | varchar2(40) | chapter id |
| terminaltype | number(10) | hardware type 1web; 2.wap240x320;3.wap320x480;4wap480x640; 5. client side 240x320;6. client side 320x480; 7 client side 480x640;8epg |
| originalpagenum | number(10) | The page number of the original image |
| pagenum | number(10) | current page number |
| opertime | varchar2(14) | operation time |

Step E: the user reads the manga using the terminal A and adds the bookmark.

Step F: the user accesses the bookmark list through the terminal B, chooses the bookmark, and performs page number transformation, and continues to read the manga , so that the seamless reading may be realized.

Hereinafter, the steps E and F will be described with an example.

Taking a mobile phone A and a computer B as an example, the screen size of the mobile phone A is 240x320, and the computer is a normal PC.

Wherein the relationship between the image displayed on the mobile phone A and an original image is as follows.
PlatformMark.xml
<?xml version="1.0" ?>
- <Mark Type="wap240320">
<Detail Page="1" Scene="01" />
<Detail Page="1" Scene="02" />
<Detail Page="1" Scene="03" />
<Detail Page="1" Scene="04" />
<Detail Page="1" Scene="05" />
<Detail Page="2" Scene="06" />
<Detail Page="2" Scene="07" />
<Detail Page="2" Scene="08" />
<Detail Page="2" Scene="09" />
<Detail Page="2" Scene="10" />
<Detail Page="3" Scene="11" />
<Detail Page="3" Scene="12" />
<Detail Page="3" Scene="13" />
<Detail Page="3" Scene="14" />
<Detail Page="3" Scene="15" />
<Detail Page="4" Scene="16" />
<Detail Page="4" Scene="17" />
<Detail Page="4" Scene="18" />
<Detail Page="4" Scene="19" />
<Detail Page="4" Scene="20" />
<Detail Page="5" Scene="21" />
<Detail Page="5" Scene="22" />
<Detail Page="5" Scene="23" />
<Detail Page="5" Scene="24" />
<Detail Page="5" Scene="25" />
<Detail Page="6" Scene="26" />
<Detail Page="6" Scene="27" />
<Detail Page="6" Scene="28" />
<Detail Page="6" Scene="29" />
<Detail Page="6" Scene="30" />
<Detail Page="7" Scene="31" />
<Detail Page="7" Scene="32" />
<Detail Page="7" Scene="33" />
<Detail Page="7" Scene="34" />
<Detail Page="7" Scene="35" />
<Detail Page="8" Scene="36" />
<Detail Page="8" Scene="37" />
<Detail Page="8" Scene="38" />
<Detail Page="8" Scene="39" />
<Detail Page="8" Scene="40" />
<Detail Page="9" Scene="41" />
<Detail Page="9" Scene="42" />
<Detail Page="9" Scene="43" />
<Detail Page="9" Scene="44" />
<Detail Page="9" Scene="45" />
<Detail Page="11" Scene="46" />
<Detail Page="11" Scene="47" />
<Detail Page="11" Scene="48" />
<Detail Page="11" Scene="49" />
<Detail Page="11" Scene="50" />
<Detail Page="12" Scene="51" />
<Detail Page="12" Scene="52" />
<Detail Page="12" Scene="53" />
<Detail Page="12" Scene="54" />
<Detail Page="12" Scene="55" />
<Detail Page="10" Scene="56" />
<Detail Page="10" Scene="57" />
<Detail Page="10" Scene="58" />
<Detail Page="10" Scene="59" />
<Detail Page="10" Scene="60" />
</Mark>

Wherein, "page" indicates the original image, and "Scene" indicates the page number of image deeply processed by the terminal A.

The relationship between the image (corresponding to the above second image) displayed on the computer B and the original image is as follows.
PlatformMark.xml
<?xml version="1.0" ?>
- <Mark Type="web">
<Detail Page="1" Scene="01" />
<Detail Page="2" Scene="02" />
<Detail Page="3" Scene="03" />
<Detail Page="4" Scene="04" />
<Detail Page="5" Scene="05" />
<Detail Page="6" Scene="06" />
<Detail Page="7" Scene="07" />
<Detail Page="8" Scene="08" />
<Detail Page="9" Scene="09" />
<Detail Page="11" Scene="10" />
<Detail Page="12" Scene="11" />
<Detail Page="10" Scene="12" />
</Mark>

Wherein "page" indicates the original image, and "Scene" indicates the page number of image deeply processed by the terminal A.

The method comprises the following step:

Step 1: Terminal A displays page 10 of the manga, and adds a bookmark.

Step 2: Terminal B accesses the bookmark, and obtains that the page number on the terminal B is 02 based on the bookmark, and then continues to display the manga from the location where the user left off last time. If the relationship cannot be found, the terminal B will display the manga from the first page.

Wherein the step of transforming is as follows: the page number 10 displayed on the terminal A corresponds to the page number 2 of the original image; according to the page number 2 of the original image, it is found that the minimum page number corresponding to the terminal B is 02.

As shown in Fig. 6, a user may choose various screens in various times to read the manga. For example, in the daytime, a user may choose to read a manga on a mobile phone on his/her way to work, and adds a bookmark at the end of reading; at night, the user gets home, and browses the bookmark list using a computer to obtain the actual page number displayed on the computer through transforming the bookmark page number, so as to read the manga from the location where the user left off in the daytime.

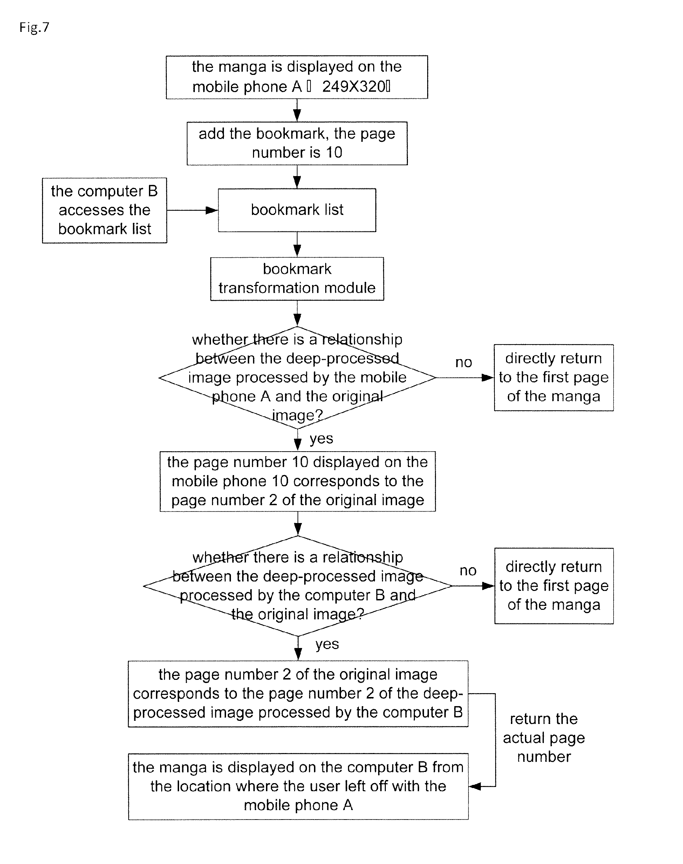

As shown in Fig. 7, the flow of the processing method according to the present disclosure is as follows.

Step 1: a manga is normally displayed on a mobile phone A (screen thereof is 240x320).

Step 2: the page number 10 is displayed and the bookmark is added at the end of the reading.

Step 3: the bookmark list is established which comprises the hardware type field (hardware type 1web; 2.wap240x320; 3.wap320x480; 4wap480x640; 5.client side 240x320; 6. client side 320x480;7.client side 480x640; 8 epg) to facilitate the transformation of the bookmark page number.

Step 4: the computer B accesses the bookmark list.

Step 5: it is determined whether there is any relationship between the original image and the image deeply processed by the mobile phone A through the transformation of the bookmark page number, if no, proceed to step 6; if yes, proceed to step 7.

Step 6: directly return to the first page of the manga, and thus the process ends.

Step 7: it is obtained that the page number 10 displayed on the terminal A corresponds to the page number 2 of the original image 2, and it is determined that whether there is any relationship between the original image and the image deeply processed by the computer B, if no, proceed to step 8; if yes, proceed to step 9.

Step 8: directly return to the first page of the manga, and thus the process ends.

Step 9: it is obtained that the minimum page number of the image deeply processed by the computer B is 02 which is corresponding to the page number 2 of the original image 2.

Step 10: the computer B obtains that the actual page number is 2, and directly accesses the page 2, and the process ends.

In the embodiments of the present disclosure, the user may integrate a same manga under various circumstances through the bookmark, and may seamlessly read with various screens (such as the mobile phone screen, the computer screen, the television screen). The user may read the manga with his/her smart mobile phone on the way to work, and read the manga from the location where the user left off last time with another device (such as the television, the computer) by utilizing the user's bookmark or system's bookmark, when the user returns to home.

The embodiments of the present disclosure introduces the original image, and transforms it to be the image adapting to various hardware, and generates the relationship between the image and the page number of the original image. The required page number displayed on the corresponding hardware may be obtained through the transformation of the page number according to the relationship between page numbers, which make it possible that the same resource may be browsed on three types of screens (such as the mobile phone screen, the computer screen, the television screen). During the switch of the three types of screens, the page number displayed on various types of screens (such as the mobile phone screen) recorded by the bookmark is transformed, to search the actual page serial number displayed on the screen to be used for reading, so as to realize seamless reading.

Through the above manner, the user may choose various screens in various times to read the same manga so that the reading experience and reading quality are improved, and the operator may have a practical way to expand its service in the background of the integration of the three types of networks.

In addition, the present disclosure defines the hardware type to be numeric type (terminaltype, serial number (10)) to facilitate expansion, so as to improve the system design flexibility.

The terminal types comprise a hardware type, a software version and a screen size.

For persons skilled in the art, it would be appreciated that a part or all of the steps in the above embodiments may be realized through instructing relevant hardware by a program which may be stored in a computer readable storage medium, such as a disk, a compact disk, ROM (Read-Only Memory), or RAM (Random Access Memory) or the like.

In the embodiments of the present disclosure, the serial number of each step does not intend to limit the order of those steps. For persons skilled in the art, the modification to the order of those steps without any inventive work shall fall within the scope of the present disclosure.

What described above is merely preferable embodiments of the present disclosure, and is not intended to limit the scope of the present disclosure. It should be noted, for persons skilled in the art, various modifications and improvements may be made without departing from the scope of the present disclosure, which shall be deemed to fall within the scope of the present disclosure.

## Claims

1. A method for providing reading service, which is applied to a content provision server, wherein the method comprises:
setting, by the content provision server, a tag according to an instruction of a first terminal, the tag is configured to indicate a first serial number of a first image of a first image gallery corresponding to the first terminal;
receiving, by the content provision server, a service request from a second terminal, the service request includes a terminal type of the second terminal;
sending, by the content provision server, the tag to the second terminal;
receiving, by the content provision server from the second terminal, an instruction indicating that the tag is selected;
searching, by the content provision server, a second image gallery corresponding to the terminal type of the second terminal, wherein a second image of the second image gallery adapts to display performance of the second terminal;
searching, by the content provision server, a second serial number of the second image of the second image gallery, wherein the second serial number corresponds to the first serial number marked by the tag; and
sending, by the content provision server, the second image of the second image gallery to the second terminal starting from the second serial number.

2. The method according to claim 1, wherein before the step of setting a tag, by the content provision server, according to an instruction of a first terminal, the method further comprises:
receiving, by the content provision server, a service request including a terminal type of the first terminal from the first terminal;
searching, by the content provision server, the first image gallery corresponding to the terminal type of the first terminal, wherein the first image of the first gallery adapts to display performance of the first terminal;
sending, by the content provision server, the first image to the first terminal.

3. The method according to claim 1, wherein when the first serial number and the second serial number are one-to-many, the step of searching, by the content provision server, a second serial number of the second picture of the second photo gallery corresponding to the first serial number marked by the tag comprises:
searching, by the content provision server, a minimum value of the second serial number of the second image of the second image gallery, wherein the second serial number corresponds to the first serial number marked by the tag;
correspondingly, the step of sending, by the content provision server, the second image of the second image gallery to the second terminal starting from the second serial number comprises:
sending, by the content provision server, the second image of the second image gallery to the second terminal starting from the minimum value of the second serial number.

4. The method according to claim 1, wherein the step of searching, by the content provision server, a second serial number of the second picture of the second photo gallery corresponding to the first serial number marked by the tag comprises:
searching, by the content provision server, a third serial number of an original image of an original image gallery, wherein the third serial number corresponds to the first serial number marked by the tag;
searching, by the content provision server, the second serial number of the second image of the second image gallery, wherein the second serial number corresponds to the third serial number of the original image.

5. The method according to claim 2, wherein before the step of receiving, by the content provision server, a service request from the first terminal, the method further comprises:
obtaining, by the content provision server, an original image gallery including an original image;
generating, by the content provision server, the first image through processing the original image according to a pixel size of the original image and the display performance of the first terminal;
generating, by the content provision server, a relationship between the first serial number of the first image and a third serial number of an original image;
generating, by the content provision server, the second image though processing the original image according to the pixel size thereof and the display performance of the second terminal;
generating, by the content provision server, a relationship between the second serial number of the second image and the third serial number of the original image.

6. The method according to claim 5, wherein after the step of generating, by the content provision server, the second image though processing the original image according to the pixel size thereof and the display performance of the second terminal, the method further comprises:
generating, by the content provision server, a relationship between the first serial number of the first image and the second serial number of the second image.

7. The method according to claim 5 or 6, wherein the step of generating the first image through processing the original image comprises:
cutting, by the content provision server, the original image to generate the first image; or
piecing together, by the content provision server, the original image to generate the first image; or
transforming, by the content provision server, pixels of the original image to generate the first image.

8. The method according to claim 1, wherein the display performance of the second terminal comprises: a physical size of a screen of the second terminal, a pixel size of the screen of the second terminal, a processing speed a CPU of the second terminal, and/or a bandwidth of an access network for the second terminal.

9. A content provision server, comprising: a tag setting module, a receiving unit, a first sending module, a receiving module, a first searching module, a second searching module and a second sending module, wherein
the tag setting module is configured to set a tag according to an instruction of a first terminal, the tag is configured to indicate a first serial number of a first image of a first image gallery corresponding to the first terminal;
the receiving module is configured to receive a service request from a second terminal, the service request includes a terminal type of the second terminal;
the first sending module is configured to send the tag to the second terminal;
the receiving module is configured to receive an instruction indicating that the tag is selected from the second terminal;
the first searching module is configured to search a second image gallery corresponding to the terminal type of the second terminal, wherein a second image of the second image gallery adapts to display performance of the second terminal;
the second searching module is configured to search a second serial number of the second image of the second image gallery, wherein the second serial number corresponds to the first serial number marked by the tag;
the second sending module is configured to send the second image of the second image gallery to the second terminal starting from the second serial number.

10. The content provision server according to claim 9, further comprising an obtaining module, an image processing module and a relationship generating module, wherein
the obtaining module is configured to obtain an original image gallery including an original image;
the image processing module is configured to generate the first image through processing the original image according to a pixel size thereof and display performance of the first terminal, and to generate the second image through processing the original image according to the pixel size thereof and display performance of the second terminal;
the relationship generating module is configured to generate a relationship between the first serial number of the first image and a third serial number of the original image, and to generate a relationship between the second serial number of the second image and the third serial number of the original image.

11. The content provision server according to claim 10, wherein the image processing module further comprises:
a cutting sub-module configured to cut the original image to generate the first image; or
a piecing sub-module configured to piece together the original image to generate the first image, or
a transforming sub-module configured to perform pixel transformation on the original image to generate the first image.

12. A content provision system, comprising a first terminal, a second terminal and a content provision server, wherein
the first terminal is configured to send an instruction of setting a tag to the content provision server;
the content provision server is configured to:
set the tag according to the instruction from the first terminal, the tag is configured to indicate a first serial number of a first image of a first image gallery corresponding to the first terminal;
receive a service request from the second terminal, wherein the service request includes a terminal type of the second terminal;
send the tag to the second terminal;
receive an instruction indicating that the tag is selected from the second terminal;
search a second image gallery corresponding to the terminal type of the second terminal, wherein a second image of the second image gallery adapts to display performance of the second terminal;
search a second serial number of the second image of the second image gallery, the second serial number corresponds to the first serial number marked by the tag; and
send the second image of the second image gallery to the second terminal starting from the second serial number;
the second terminal is configured to receive the second image of the second image gallery from the content provision server starting from the second serial number.
